# EUROPEAN PATENT APPLICATION

(11) **EP 1 193 726 A2**
(43) Date of publication of application: **03.04.2002**
(21) Application number: 01123424.2
(22) Date of filing: 28.09.2001
(51) Int. Cl.: H01G 5/16

(54) **Fluid variable capacitor**

(30) Priority: 29.09.2000 US 675604
(71) Applicant: Eni Technologies, Inc., Rochester, NY 14623 (US)
(72) Inventor: Lor, Virak, West Henrietta, New York 14586 (US); Keane, Anthony R.A., Webster, New York 14580 (US); Sellers, Jeff C., Manchaca, Texas 78652 (US)
(74) Representative: Neumann, Ernst Dieter, Dipl.-Ing.

(57) **Abstract**

A fluid variable capacitor is provided having increased volumetric density, withstanding voltage, reliability, and cost savings over conventional variable capacitors. The fluid variable capacitor includes a case that contains a stator plate and a movable plate that are each electrically conductive. A dielectric fluid separates the stator plate and the movable plate. A movement device is coupled to the movable plate for moving the movable plate with respect to the stator plate such that a capacitance formed between the plates is varied.

## Description

### BACKGROUND AND SUMMARY OF THE INVENTION

The present invention relates generally to RF capacitors, and in particular to variable RF capacitors having high volumetric density.

Material processing, such as plasma deposition and sputtering, through the utilization of plasmas has been known for many years. These processes generally require the generation of an RF power signal that is coupled to a plasma chamber. Due to the highly nonlinear input impedance of the plasma chamber, a matching network is typically installed between the source of RF power, an RF generator, and the plasma chamber. The matching network is actively controlled during a material processing sequence to decrease the electrical stresses imposed on the RF generator by changes in the plasma chamber input impedance that occur throughout the process. The matching network facilitates a steady flow of RF power from the generator to the plasma chamber, leading to increased system power efficiency and less expensive, lower output power capability RF generators. Conventional matching networks generally include a pi filter having at least one variable capacitor that is controlled in response to changes in the plasma chamber input impedance. Conventional variable capacitors employed in matching networks include a motor driven shaft for controlling the capacitance of the device. The capacitors are generally constructed with either an air or vacuum dielectric.

Conventional variable capacitors require a significant amount of volume due to the relatively high-power imposed on the capacitors and the low dielectric constant of vacuum and air. In addition, the high voltage imposed on the capacitors to additional volume to maintain the required dielectric withstanding voltage.

While conventional air and vacuum variable capacitors can be used in RF circuits to provide a variable capacitance, they have not proven capable of minimizing the volume required to obtain a predetermined capacitance. In addition, conventional air variable capacitors have suffered from relatively little reliability. Conventional air variable capacitors often exhibit arcing between the plates caused by changes in environmental conditions such as humidity that diminish the breakdown voltage of the capacitor. Similarly, conventional vacuum variable capacitors often exhibit premature wear out and leaky bellows caused by overheating due to poor thermal conductivity.

The present fluid variable capacitor provides increased volumetric density, withstanding voltage, improved reliability, and cost savings. The variable capacitor includes a case that contains a stator plate and a movable plate that are each electrically conductive. A dielectric fluid separates the stator plate and the movable plate. A movement device is coupled to the movable plate for moving the movable plate with respect to the stator plate such that a capacitance formed between the plates is varied.

For a more complete understanding of the invention, its objects and advantages, reference may be had to the following specification and to the accompanying drawings.

### BRIEF DESCRIPTION OF THE DRAWINGS

Figure 1A is an illustration of a plasma processing system incorporating a presently preferred embodiment of the invention;
Figures 1B - 1D are illustrations of several filter configurations of a fluid variable capacitor in accordance with the teachings of the invention;
Figure 2 is a block diagram illustrating an embodiment of a fluid variable capacitor in accordance with the teachings of the invention;
Figures 3A - 3K illustrate several plate configurations of a fluid variable capacitor in accordance with the teachings of the invention;
Figure 4 is a block diagram illustrating a presently preferred embodiment of a fluid variable capacitor in accordance with the teachings of the invention; and
Figures 5A and 5B illustrate two-dimensional views of a presently preferred embodiment of a matching network in accordance with the teachings of the invention.

### DETAILED DESCRIPTION OF THE PREFERRED EMBODIMENT

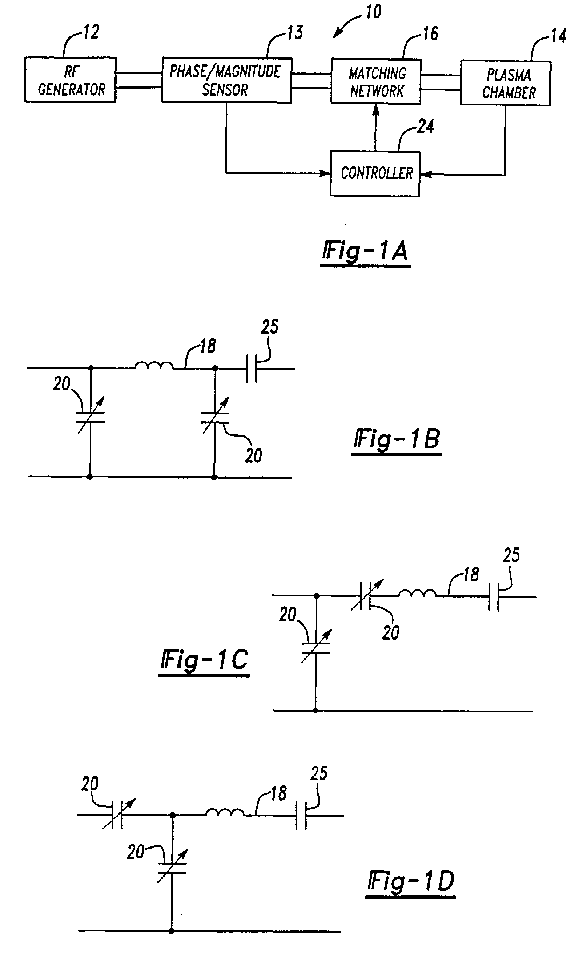

Referring to Figure 1A, a plasma processing system 10 for processing integrated circuits and compact discs and the like is illustrated. While the present invention is shown in described with a plasma processing system 10 it will be appreciated that the particular system is merely exemplary. The processing system 10 includes an RF generator 12 for generating an RF power signal that is coupled through a matching network 16 to a plasma chamber 14. Coupled between the RF generator 12 and matching network 16 is a phase/magnitude sensor 13 for sensing the output characteristics of the RF generator 12. The matching network 16 provides a controllable filter for matching the impedances of the plasma chamber 14 and RF generator 12. Included in the matching network 16 are an inductor (not shown) and two fluid variable capacitors (not shown). A controller 24 coupled to the plasma chamber determines the impedance matching of the plasma chamber 14 and RF generator 12. The controller 24 controls the fluid variable capacitors in response to the determined impedance match.

Referring to Figures 1B - 1D, several altemative matching network filter configurations in accordance with the teachings of the present invention are illustrated. A pi-filter configuration 20 is illustrated in Figure 1B, an L-filter configuration 21 is illustrated in Figure 1C, and a T-filter configuration 23 is illustrated in Figure 1D. Each of the filter configurations is formed from an inductor 18 and two fluid variable capacitors 20. All of the filter configurations may also include a series capacitor 25 to block DC bias.

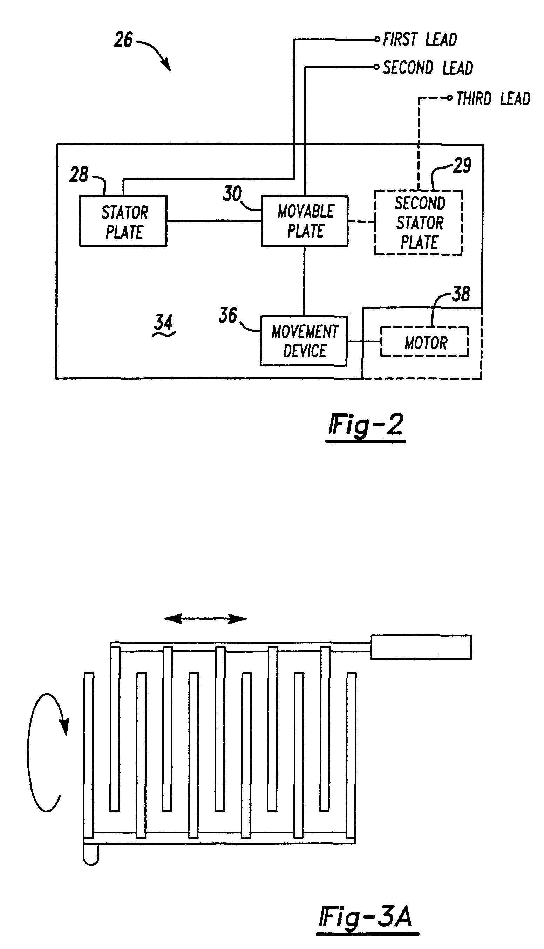

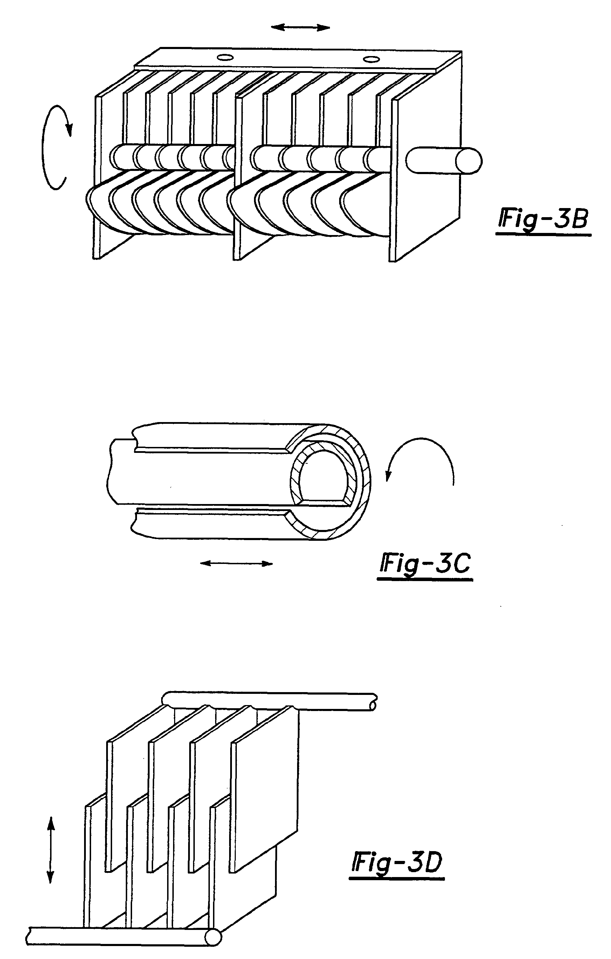

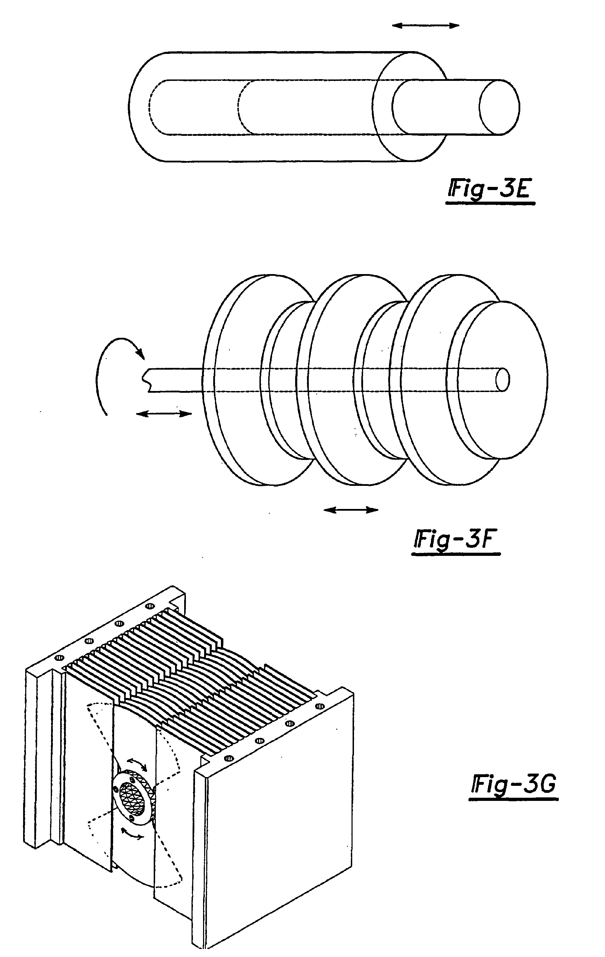

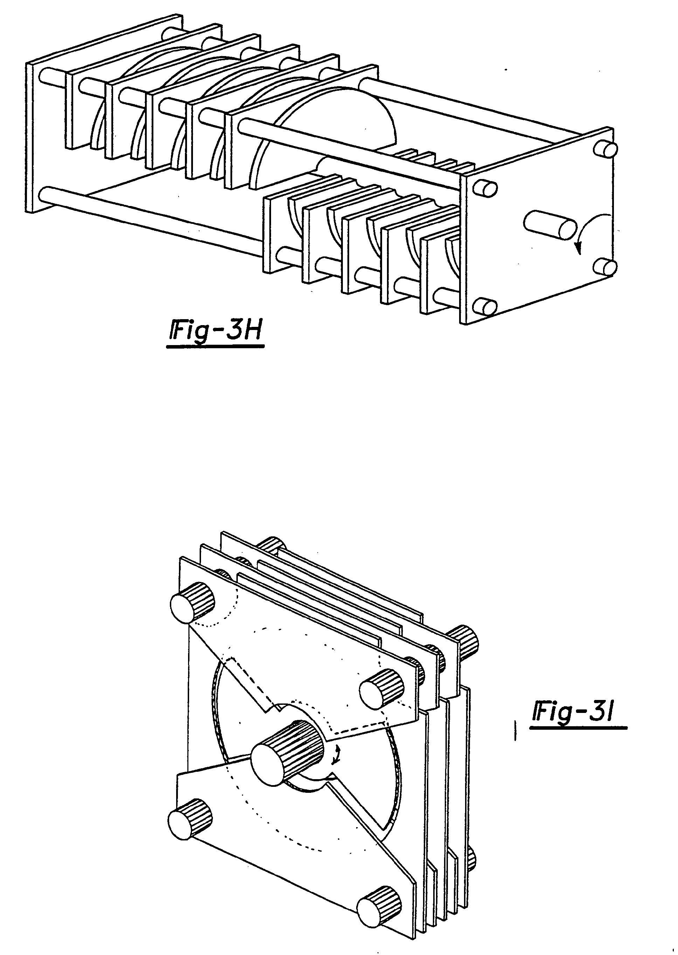

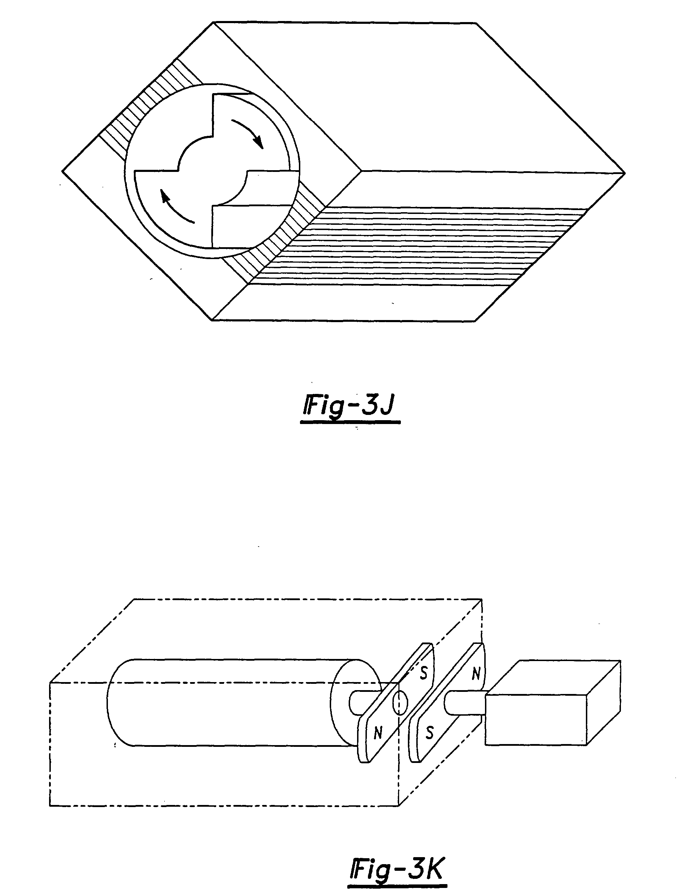

With reference to Figure 2, a block diagram of an embodiment of a fluid variable capacitor 26 constructed in accordance with the teachings of the present invention is illustrated. The fluid variable capacitor 26 includes a stator plate 28 and a movable plate 30. At least one surface of the stator plate 28 and one surface of the movable plate 30 are made of an electrically conductive material such as copper, steel, aluminum, silver, and tin. The plates 28 and 30 are arranged so that a portion of the surfaces overlap each other so that a capacitor is formed therebetween. Those skilled in the art will recognize that the capacitance formed between the plates 28 and 30 can be calculated from the following equation: C = keA/d, where C is the capacitance, k is the relative dielectric constant of the dielectric medium, e is the permitivity constant, A is the overlapping surface area of the plates 28 and 30, and d is the distance or spacing between the plates 28 and 30. Therefore, varying the overlapping surface area or changing the distance between the plates 28 and 30 will cause an inversely proportional change in the capacitance. The plates 28 and 30 may be arranged in numerous plate configurations as illustrated in Figures 3A-3K. The plate configurations include parallel plate semicircular discs (Figures 3A-3B), parallel plate semicircular cylinders (Figure 3C), parallel plate sheets (Figure 3D), coaxial cylinders (Figure 3E), parallel disks movable in the longitudinal direction (Figure 3F), butterfly configuration (Figure 3G), differential capacitor configuration (Figure 3H), modified butterfly configuration having a predetermined minimum capacitance (Figure 31), coaxial cylinders with internal motor (Figure 3J), and magnetically coupled movement device (Figure 3K).

The fluid variable capacitor 26 may additionally include a second stator plate 29 arranged with respect to the movable plate 30 so that a capacitor is formed therebetween. Two series capacitors are thereby formed; the first capacitor being formed between the stator plate 28 and movable plate 30, and the second capacitor formed between the movable plate 30 and the second stator plate 29. With this configuration a third lead is coupled to the second stator plate 29. The second lead may be left unused or employed as a tap for selecting a portion of the effective capacitance formed between the stator plate 28 and the second stator plate 29.

The plates 28 and 30 are contained in a case 32 that includes a fluid dielectric medium 34 such as Dow Coming 561. The fluid dielectric medium 34 separates the plates 28 and 30 increasing the voltage breakdown capability and capacitance, and providing improved heat dissipation. The fluid dielectric medium has a dielectric constant at 25 degrees Celsius and 100 Hz that is greater than 1.5 and preferably about 2.71 or greater. In addition, the fluid dielectric medium has a dielectric strength of at least 100 volts per mil, and preferably 350 volts per mil or greater. The thermal conductivity of the fluid dielectric medium is at least 0.026 W/mK, and preferably greater than or equal to 0.15 W/mK. Using a fluid dielectric medium 34 instead of air or a vacuum provides numerous advantages such as greater capacitance per volume, higher withstanding voltage, lower-cost, improved reliability, and improved system response to an arc event as a result of isolating the plates from external environmental factors such as humidity. The greater attainable capacitance is provided by the higher dielectric constant. Higher withstanding voltage is provided by the increased dielectric strength of the fluid dielectric medium 34. The improved system response to an arc event is provided by the improved response time for detecting an arc due to the higher thermal conductivity of the fluid medium as well as the extinguishing effects of the increased mass of the fluid that occur when the movable plate 30 is rapidly moved.

A movement device 36 is coupled to the movable plate 30 to provide a means for moving the movable plate 30 with respect to the stator plate 28. In the presently preferred embodiment of the invention a shaft is employed as the movement device. However, the scope of the invention includes using other movement devices such as levers and magnetic coupling from magnets or a motor. The scope of the invention also includes configuring the movement device 36 to move the movable plate 30 so that the quantity of overlapping area between the,plates 28 and 30 is varied, or to move the movable plate 30 so that the distance between the plates 28 and 30 is varied, or to move the movable plate 30 so that both the overlapping area and the distance between the plates 28 and 30 is varied. The movement device 36 can be either electrically conducting or non-conducting. A movement device 36 made of electrically conducting material provides a convenient means for electrically connecting multiple movable plates 30.

A motor 38 is coupled to the movement device 36 so that the movable plate 30 can be moved in response to an electrical signal. The motor 38 may be located either extemal to or within the case 32.

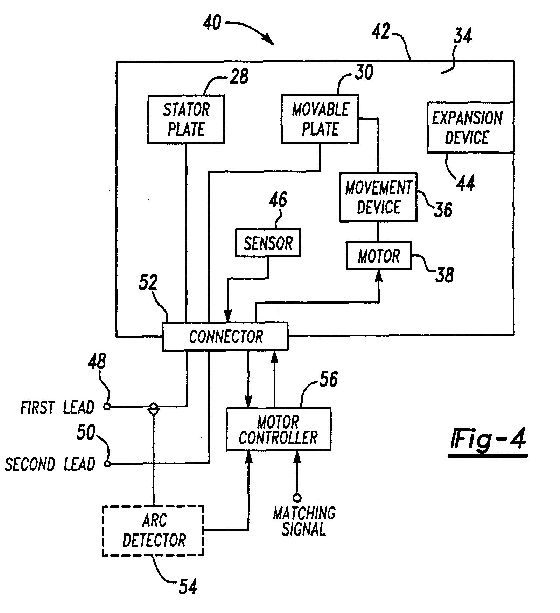

Referring to Figure 4, a block diagram of a presently preferred embodiment of a fluid variable capacitor 40 in accordance with the teachings of the invention is illustrated. An enclosure 42 provides a sealed environment for a fluid dielectric medium 34 and other components of the fluid variable capacitor 40. The fluid dielectric medium 34 used presently preferred embodiment is preferably Dow Coming 561, however other liquid dielectrics having a dielectric constant of at least 1.5, and a dielectric strength of at least 100 V/mil, are within the scope of invention. Contained within the enclosure 42 are the stator plate 28, movable plate 30, movement device 36, and motor 38, as well as an expansion device 44, and sensor 46.

The stator plates 28 and movable plates 30 of the presently preferred embodiment are formed as a series of interleaved parallel plate semicircular discs made of an electrically conducting material such as aluminum, copper, and silver. In the presently preferred embodiment, the electrically conducting material is an aluminum compound. The movement device 36 is comprised of an electrically conducting material and passes through an insulated center cut out of the stator plates 28, bonding to the interleaved movable plates 30. The opposing end of the movement device 36 is coupled to the motor 38, which controls the movement of the movable plates 30. The movement device 36 in the presently preferred embodiment imparts rotational movement to the movable plates 30 causing the movable plates 30 to move into or out of mesh with the stator plates 28. It is within the scope of the invention to additionally impart longitudinal movement to the movable plates 30 causing movement of the movable plates 30 to increase or decrease the distance to the stator plates 28. A first lead 48 and a second lead 50 are electrically coupled to the stator plate 28 and movable plate 30 respectively. The sensor 46 provides at least one output that reflects one or more enclosure operating conditions such as temperature, pressure, and fluid level. In the presently preferred embodiment, the sensor 46 indirectly senses for an arc event by sensing temperature. The output from the sensor 46 is coupled to a motor controller 56 that controls the motor 38 in response to the sensor output. The motor controller 56 may receive additional inputs such as a matching network signal requesting a change in capacitance. Although in the presently preferred embodiment the motor controller 56 is located external to the enclosure 42, it is within the scope of the invention to include the motor controller 56 within the enclosure 42. An alternative arc detector 54 may be implemented by sensing current flow in either the first lead 48 or the second lead 50. An output from the altemative arc detector 54 is coupled to the motor controller 56. When an arc event occurs, the fluid dielectric medium 34 near the arc event increases in temperature as heat is absorbed. The increase in temperature spreads to the remaining fluid dielectric medium 34 due to the high thermal conductivity of the fluid. The sensor 46 detects the increase in temperature of the dielectric medium 34 and in response signals to the motor controller 56.

A sealed connector 52 situated in the wall of the enclosure provides a pathway for electrical signals passing into and out of the enclosure 42. An expansion device 44 is configured within the enclosure 42 to compensate for volumetric changes in the dielectric fluid 34 which may be caused by variations in temperature, pressure, and quantity of fluid. Those skilled in the art will readily recognize there are numerous suitable expansion devices within the scope of the invention including compressible devices and mediums as well as air bladders and the such.

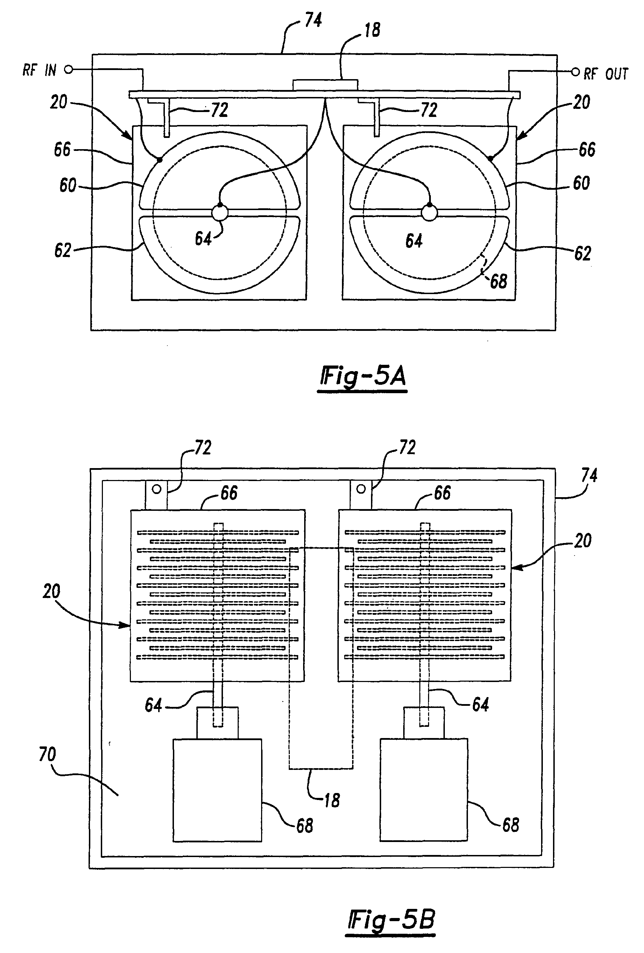

Referring to Figs. 5A and 5B, a presently preferred embodiment of a matching network 16 in accordance with the teachings of the invention is illustrated. The matching network 16 includes two fluid variable capacitors 20 and an inductor 18 connected in a pi-filter configuration. Although the presently preferred embodiment employs a pi-filter configuration, it is within the scope of the invention to use other filter configurations such as L-filter and T-filter configurations. Each fluid variable capacitor 20 includes a plurality of stator plates 60 and movable plates 62, a movement device 64 coupled to the movable plates 62, a motor 68 coupled to the movement device 64, and a mounting structure 66.

The stator plates 60 and movable plates 62 are formed as a series of interleaved parallel plate semicircular discs made of an aluminum compound. The movement device 64 (for Fig. 5A, 5B) is comprised of an electrically conducting material and passes through an insulated center cut-out of the stator plates 60, bonding to the interleaved movable plates 62. The opposing end of the movement device 64 is coupled to the motor 68, which controls the movement of the movable plates 62. The motor 68 in the presently preferred embodiment is a DC stepping motor, however those skilled in art will recognize the principles of the invention may be readily extended to various motor types including applicable motors and actuators. The movement device 64 in the presently preferred embodiment imparts rotational movement to the movable plates 62 causing the movable plates 62 to move into or out of mesh with the stator plates 60.

An enclosure 74 encircles the fluid variable capacitors 20 and inductor 18. The enclosure 74 contains a fluid dielectric medium 70 in which the enclosed capacitors 20 and inductor 18 are immersed. The fluid dielectric medium 70 used in the presently preferred embodiment is preferably Dow Coming 561, however other liquid dielectrics having a dielectric constant of at least 1.5, a dielectric strength of at least 100 V/mil, and a thermal conductivity of at least 0.026 W/mK are within the scope of invention.

Attached to each capacitor 20 is a mounting bracket 72 for mounting a board containing the inductor 18. A connector 76 is mounted in the wall of the enclosure 74 to provide a path for electrical signals into and out of the enclosure 74.

Referring to Figs. 1, 5A and 5B, in operation the controller 24 receives a matching signal such as the transfer coefficient, being indicative of the relative matching in impedance between the RF generator and plasma chamber. In response to the matching signal, the controller 24 determines an appropriate matching network impedance characteristic to compensate for the indicated impedance mismatch. The controller 24 outputs a signal that drives the motors of fluid variable capacitors 20 and 22 so that the determined impedance characteristic of the matching network 16 is attained.

The fluid variable capacitor of the present invention includes a liquid dielectric having a higher dielectric constant and dielectric strength. The fluid variable capacitor provides a smaller physical device that is capable of operating under higher potential voltages than conventional variable capacitors. The liquid dielectric isolates the performance characteristics from the surrounding environment. In addition, the thermal operation of the device is enhanced by the high thermal conductivity of the liquid dielectric.

Thus it will be appreciated from the above that as a result of the present invention, a fluid variable capacitor for an RF delivery system used for industrial processing is provided by which the principal objectives, among others, are completely fulfilled. It will be equally apparent and is contemplated that modification and/or changes may be made in the illustrated embodiment without departure from the invention. Accordingly, it is expressly intended that the foregoing description and accompanying drawings are illustrative of preferred embodiments only, not limiting, and that the true spirit and scope of the present invention will be determined by reference to the appended claims and their legal equivalent.

## Claims

1. A variable capacitor comprising:
a stator plate being electrically conductive;
a movable plate being electrically conductive;
a dielectric fluid separating the stator plate and the movable plate;
a case containing the dielectric fluid, and the stator plate and movable plate; and
a movement device for moving the movable plate with respect to the stator plate such that a capacitance formed therebetween is varied.

2. The variable capacitor of Claim 1 wherein the movable plate is movable in a radial direction with respect to the stator plate.

3. The variable capacitor of Claim 1 wherein the movable plate is movable in a longitudinal direction with respect to the stator plate.

4. The variable capacitor of Claim 1 further including a motor coupled to the movement device to couple mechanical energy to the movable plate.

5. The variable capacitor of Claim 1 further including an arc detector to detect an arc event.

6. The variable capacitor of Claim 5 wherein the arc detector is selected from the group of: dielectric fluid temperature sensors, case temperature sensors, case pressure sensors, and electrical current sensors.

7. The variable capacitor of Claim 5 further including a controller coupled between the arc detector and the motor;
the controller, in response to a detected arc, to signal the motor to drive the movable plate such that the arc is extinguished.

8. The variable capacitor of Claim 1 wherein the stator plate and the movable plate are substantially formed in the shape of semicircular disks, such that the capacitance between the plates is varied as the movable plate is moved in a radial and a longitudinal direction with respect to the stator plate.

9. The variable capacitor of Claim 1 further including an expansion device being operable to compensate for changes in dielectric fluid volume.

10. The variable capacitor of Claim 4 being electrically coupled to an inductor such that a matching network is formed.

11. The variable capacitor of Claim 4 wherein the matching network includes at least two variable capacitors coupled in a filter configuration with the inductor.

12. The variable capacitor of Claim 1 wherein the movement device is selected from the group of: a shaft, a magnet, and a motor.

13. A variable capacitor comprising:
a stator plate being electrically conductive;
a movable plate being electrically conductive;
a dielectric fluid separating the stator plate and the movable plate;
an enclosure for enclosing the dielectric fluid, and the stator plate and movable plate;
a movement device coupled to the movable plate; and
a motor coupled to the movement device being operable to move the movable plate with respect to the stator plate such that a capacitance formed therebetween is varied.

14. The variable capacitor of Claim 13 wherein the movable plate is movable in a radial direction with respect to the stator plate.

15. The variable capacitor of Claim 13 wherein the motor is contained within the enclosure.

16. The variable capacitor of Claim 13 further including an arc detector to detect an arc event occurring within the enclosure.

17. The variable capacitor of Claim 16 wherein the arc detector is selected from the group of: dielectric fluid temperature sensors, case temperature sensors, case pressure sensors, and electrical current sensors.

18. The variable capacitor of Claim 15 further including a controller coupled between the arc detector and the motor, the controller being operable to control the motor in response to the detected arc event.

19. The variable capacitor of Claim 13 wherein the dielectric fluid has a thermal conductivity of at least 0.026 W/mK, a dielectric constant of at least 1.5, and a dielectric strength of at least 100 V/mil.

20. The variable capacitor of Claim 19 being coupled to an inductor such that a matching network is formed.

21. A variable capacitor comprising:
a stator plate being electrically conductive;
a movable plate being electrically conductive;
a dielectric fluid separating the stator plate and the movable plate, the dielectric fluid having a thermal conductivity of at least 0.026 W/mK, a dielectric constant of at least 1.5, and a dielectric strength of at least 100 V/mil;
an enclosure for enclosing the dielectric fluid, and the stator plate and movable plate;
a movement device coupled to the movable plate;
a motor coupled to the movement device being operable to move the movable plate with respect to the stator plate such that a capacitance formed therebetween is varied;
an arc detector to detect an arc event; and
a controller being operable to control the motor in response to the arc event.
